# EUROPÄISCHE PATENTANMELDUNG

(11) **EP 2 921 465 A1**
(43) Veröffentlichungstag der Anmeldung: **23.09.2015**
(21) Anmeldenummer: 14160880.2
(22) Anmeldetag: 20.03.2014
(51) Int. Cl.: C04B 28/18, C04B 30/00, C04B 30/02, E04B 1/80, C04B 111/28

(54) **Verwendung eines Dämmkörpers als Klimaplatte**

(71) Anmelder: PROMAT GmbH, 40878 Ratingen (DE)
(72) Erfinder: Krasselt, Volker, 40882 Ratingen (DE); Rank, Jürgen, 09600 Oberschöna (DE); Feulner, Hans-Joachim, 45239 Essen (DE); Heymans, Luc, 1850 Grimbergen (BE)
(74) Vertreter: Ring & Weisbrodt

(57) **Zusammenfassung**

Die vorliegende Erfindung betrifft die Verwendung eines Dämmkörpers enthaltend oder bestehend aus
30 bis 90 Gew.-% an Metalloxiden von Silizium und/ oder Aluminium,
2 bis 70 Gew.-% wenigstens eines Calciumsilikats,
0 bis 30 Gew.-% wenigstens eines Trübungsmittels,
0 bis 10 Gew.-% wenigstens eines Fasermaterials sowie
0 bis 15 Gew.-% wenigstens eines anorganischen Bindemittels

zur Feuchtigkeitsregulierung von Gebäudeinnenräumen.

## Beschreibung

Die Erfindung betrifft die Verwendung eines Dämmkörpers enthaltend oder bestehend aus 30 bis 90 Gew.-% an Metalloxiden von Silizium und/ oder Aluminium, 2 bis 70 Gew.-% wenigstens eines Calciumsilikats, 0 bis 30 Gew.-% wenigstens eines Trübungsmittels, 0 bis 10 Gew.-% wenigstens eines Fasermaterials sowie 0 bis 15 Gew.-% wenigstens eines anorganischen Bindemittels zur Feuchtigkeitsregulierung von Gebäudeinnenräumen.

Für die Innendämmung von Gebäuden, sei es für deren Neuerstellung oder deren Sanierung, existiert eine Vielzahl unterschiedlicher Produkte. Diese sollten neben der Erfüllung gesetzlicher Normen und Richtlinien, wie insbesondere der Senkung des Heizenergieverbrauchs, auch weitere Aspekte berücksichtigen, wie die Wohnbehaglichkeit, die Vermeidung von Feuchte- und Schimmelbildung, die Umweltverträglichkeit der verwendeten Rohstoffe, den Brandschutz und eine leichte Verarbeitbarkeit.

Aus DE 101 46 174 C2, WO 2010/009713 A2 und WO 2010/009714 A2 sind Baustoffplatten auf Calciumsilikatbasis bekannt, welche mit anderen Baustoffen in Sandwich-Bauweise kombiniert sind. Dabei werden Dämmstoffe mit niedriger Wärmeleitfähigkeit bevorzugt. Diese Sandwichbauweise führt aber zu extrem hohen Kosten bei der Montage und dem Einbau.

Aus WO 2009/026910 A1 ist eine Baustoffplatte mit einer organischen Schaumschicht bekannt, die kapillarleitfähige Bereiche aufweist, welche durch die Dämmschicht verlaufen. Auf diese Weise lässt sich ein kapillarer Feuchtetransport durch die Dämmschicht erzielen. Das Einbringen der zahlreichen Durchdringungen in das Trägermaterial und das Einfüllen des kapillaraktiven Materials ist bei der Herstellung äußerst aufwendig und kostenintensiv. Zudem besteht die Baustoffplatte im Wesentlichen aus einem organischen Schaumstoff, der keine brandschutztechnische Funktion erfüllt.

In EP 1 140 729 B1 ist eine Wärmedämmplatte aus Siliziumdioxid, Calciumsilikat, einem Trübungsmittel und weiteren Hilfsstoffen beschrieben. Diese Wärmedämmplatte wird für Wärmedämm und- Brandschutzzwecke verwendet. Eine feuchtigkeitsregulierende Wirkung für Gebäudeinnenräume wird hingegen nicht erwähnt.

Die Aufgabe der vorliegenden Erfindung besteht darin, eine Maßnahme zur Verfügung zu stellen, mit der eine verbesserte Feuchtigkeitsregulierung in Gebäudeinnenräumen ermöglicht werden kann. Die Maßnahme sollte weiterhin die Einhaltung von Brandschutzvorschriften erfüllen und eine gute Wärmeisolierung ermöglichen.

Die Aufgabe wird gelöst durch die Verwendung eines Dämmkörpers enthaltend oder bestehend aus 30 bis 90 Gew.-% an Metalloxiden von Silizium und/ oder Aluminium, 2 bis 70 Gew.-% wenigstens eines Calciumsilikats, 0 bis 30 Gew.-% wenigstens eines Trübungsmittels, 0 bis 10 Gew.-% wenigstens eines Fasermaterials sowie 0 bis 15 Gew.-% wenigstens eines anorganischen Bindemittels zur Feuchtigkeitsregulierung von Gebäudeinnenräumen.

Vorzugsweise wird der Dämmkörper durch trockenes Verpressen seiner Bestandteile hergestellt, wobei der Dämmkörper insbesondere im Wesentlichen frei von organischen Bindemitteln ist. Dies ist besonders vorteilhaft, weil durch den Verzicht auf organische Bindemittel zum einen die Brandschutzeigenschaften des Dämmkörpers und in der Regel auch gleichzeitig dessen Feuchtigkeitsaufnahmevermögen verbessert werden, da viele der für die Herstellung von Dämmkörpern verwendeten organischen Bindemittel hydrophobe Eigenschaften besitzen. Das trockene Verpressen der Bestandteile des Dämmkörpers kann nach deren Vermischen in hydraulischen Pressen mit einem Pressdruck von beispielsweise 0,5 bis 5 MPa vollzogen werden.

In vorteilhafter Ausgestaltung der vorliegenden Erfindung wird der Dämmkörper nach dem trockenen Verpressen keiner thermischen Behandlung unterzogen, insbesondere wird der Dämmkörper nicht getempert oder calciniert. Dies ist vorteilhaft, weil dadurch die Herstellungskosten reduziert werden können.

In vorteilhafter Ausgestaltung der vorliegenden Erfindung weist der Dämmkörper eine Wärmeleitfähigkeit bei 10 °C gemäß EN12939 von weniger als 0,06 W/mK, insbesondere von 0,05 W/mK oder weniger, bevorzugt von 0,04 W/mK oder weniger auf.

Besonders bevorzugt ist ein Wärmedämmkörper im Rahmen der vorliegenden Erfindung, der eine Feuchtigkeitsaufnahme bei 23 °C, 95 % relativer Luftfeuchtigkeit über einen Zeitraum von 24 Stunden von wenigstens 3 Gew.-% aufweist, insbesondere von wenigstens 4 Gew.-%, bevorzugt von 5 bis 15 Gew.-%.

In weiterer Ausgestaltung der vorliegenden Erfindung enthält der Dämmkörper 5 bis 15 Gew.-% an Calciumsilikat. Das Calciumsilikat besitzt nach einer besonders bevorzugten Ausgestaltung der vorliegenden Erfindung einen Gehalt an Xonotlit und/oder Tobermorit von jeweils wenigstens 45 Gew.-% bezogen auf den Calciumsilikatanteil. Besonders vorteilhaft ist ein Xonolitgehalt von > 90 Gew.%, insbesondere > 95 Gew.%. Als Xonotlit kann beispielsweise synthetisch hergestellter Xonotlit verwendet werden, wie er zum Beispiel in GB 1193172 oder EP 0231460 beschrieben ist. Das Calciumsilikat kann im Wesentlichen durch die Summenformel Ca₆Si₆O₁₇(OH)₂ beschrieben werden.

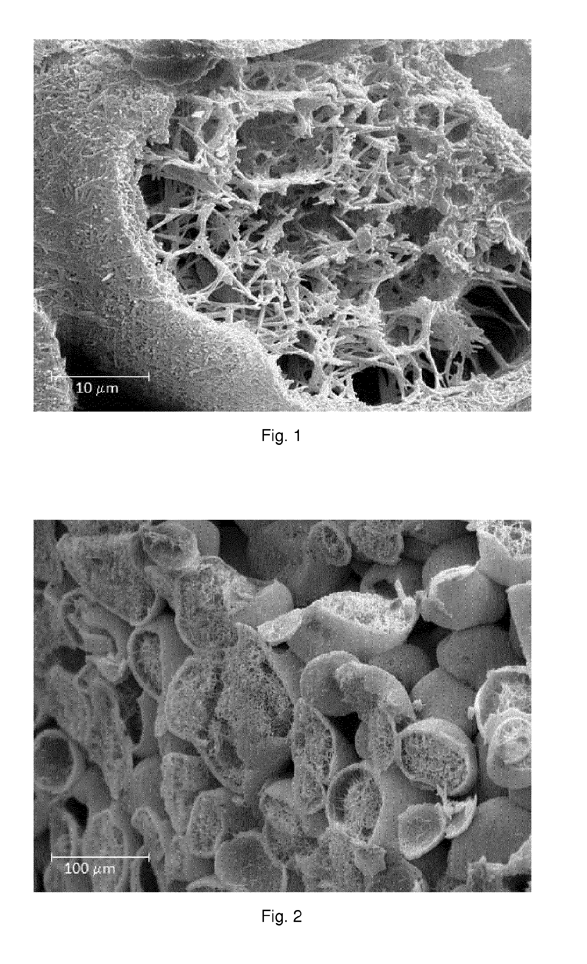

Eine besonders bevorzugte Modifikation des eingesetzten Calciumsilikats zeichnet sich dadurch aus, dass es im Wesentlichen aus kugelförmigen Aggregaten mit einem Durchmesser von etwa 1 bis 500 µm aufgebaut ist, insbesondere von 5 bis 150 µm. Die Aggregate bestehen weiter bevorzugt aus einem Kern von miteinander vernetzten Kristallnadeln, der von einer im Vergleich zum Kern dichteren Hülle umgeben ist. Rasterelektronenmikroskopische Aufnahmen dieser bevorzugten Calciumsilikat-Modifikationen sind in den Figuren 1 und 2 dargestellt.

Das im Rahmen der vorliegenden Erfindung eingesetzte Calciumsilikat kann beispielsweise eine Rohdichte gemäß DIN ISO 697 von 50 bis 200 g/l aufweisen, insbesondere von 60 bis 150 g/l.

Die spezifische BET-Oberfläche des eingesetzten Calciumsilikats kann gemäß DIN ISO 977 von wenigstens 30 m²/g aufweisen, insbesondere von wenigstens 40 m²/g.

Als Metalloxide von Silicium und/oder Aluminium können im Rahmen der vorliegenden Erfindung beispielsweise Tonerde, Kieselsäure, insbesondere pyrogene Tonerde und/oder pyrogene Kieselsäure von diesen eingesetzt werden. Besonders bevorzugt ist der Einsatz hydrophiler pyrogener Kieselsäure, weil daraus hergestellte Dämmplatten sich durch eine besonders hohe Feuchtigkeitsaufnahme auszeichnen. Der Dämmkörper enthält vorzugsweise 35 bis 80 Gew.-% an Metalloxiden von Silizium und/ oder Aluminium.

Als Trübungsmittel verwendbar sind beispielsweise Siliziumcarbid, Zirkonsilikat, Zirkonoxid, Titandioxid, insbesondere als Rutil, Ilmenit, Eisenoxid, insbesondere Eisen (II)/(III)-Mischoxide, Chromdioxid, Mangandioxid, Aluminiumoxid, Ruß oder Mischungen von diesen. Der Dämmkörpers enthält vorzugsweise 1 bis 28 Gew.-% an Trübungsmitteln, weiter bevorzugt 5 bis 25 Gew.-%. Diese Trübungsmittel dienen vor allen Dingen der Absorption und Streuung von Infrarotstrahlen und damit einer guten Dämmung gegen Wärmestrahlung im höheren Temperaturbereich.

Das Fasermaterial kann beispielsweise ausgewählt sein aus organischen oder anorganischen Fasermaterialien, wie Cellulose-, Polymer-, HT-Glasfasern, Erdalkalifasern und Steinwolle sowie Mischungen von diesen. Der Dämmkörper kann das Fasermaterial beispielsweise in einer Menge von 0,1 bis 8 Gew.-% enthalten, bevorzugt 1 bis 5 Gew.-%.

Gewünschtenfalls können anorganische Bindemittel verwendet werden, vorausgesetzt, sie sind wasserfrei. Der Dämmkörpers enthält beispielsweise 1 bis 12 Gew.-% an anorganischem Bindemittel, insbesondere 2 bis 10 Gew.-%. Jedoch ist es im Allgemeinen im Rahmen der vorliegenden Erfindung bei der Verwendung von Xonotlit in der Regel nicht mehr erforderlich, anorganische Bindemittel zuzusetzen. Einige dieser Bindemittel können auch als trockene Vormischung mit Xonotlit eingesetzt werden, da sie sich dabei besonders leicht homogen einmischen lassen.

Sofern eine Abdeckung einer oder beider Oberflächen des erfindungsgemäßen Dämmkörpers gewünscht ist, kann hierfür ein feuchtedurchlässiges Material verwendet werden, wie z. B. Glasvlies, welches unten und/oder oben in die Pressform für das übrige trockene Gemisch eingebracht und mit verpresst wird.

Die vorliegende Erfindung wird im Folgenden anhand von Ausführungsbeispielen näher erläutert.

Dabei wurden die Eigenschaften der erzeugten Dämmkörper wie folgt bestimmt:
Druckfestigkeit: DIN 826
Raumgewicht: DIN EN 1602
Biegefestigkeit: DIN EN 12089
Teilchendurchmesser: mittels Rasterelektronenmikroskop REM
Wärmeleitfähgikeit: DIN EN 129539
Feuchteaufnahme: durch Messen und Wiegen vorher und danach

Die folgenden Rohstoffe wurden eingesetzt:
Bei PROMAXON®-D handelt es sich um ein Produkt der Promat International NV. Hierbei handelt es sich um ein Calciumsilikatpulver im Wesentlichen der Formel Ca₆Si₆O₁₇(OH)₂. Der Gehalt an Xonotlit liegt bei 50-90 Gew.-% und der Gehalt an Tobermorit bei 5-40 Gew.-%. PROMAXON®-D besteht im Wesentlichen aus kugelförmigen Aggregaten mit einem Kern von miteinander vernetzten Kristallnadeln, der von einer im Vergleich zum Kern dichteren Hülle umgeben ist. Rasterelektronenmikroskopische Aufnahmen von PROMAXON®-D sind in den Figuren 1 und 2 dargestellt.
Bei PROMAXON®-B handelt es sich um ein Produkt der Promat International NV. Hierbei handelt es sich um ein Calciumsilikatpulver im Wesentlichen der Formel
Das Siliciumcarbid Silcar G 14 der Firma ESK wurde als Pulver eingesetzt mit einer mittleren Partikelgröße von 2-7 µm.
Als pyrogene Kieselsäure wurden Aerosil 200 der Firma Evonik, MS der Firma Cabot - beide hydrophil - sowie Aerosil 974 der Firma Evonik hydophop eingesetzt.
Das Rutil der Firma Europe Minerals wurde als Pulver eingesetzt mit einer mittleren Partikelgröße von 9 µm.
Die SiO₂-Filamente Belocotex 225SC6 der Firma Belchem weisen einen mittleren Durchmesser von 8 µm auf.
Die Zellwolle in Form einer Viskosefaser der Firma STW weist eine mittlere Faserlänge von 6 mm auf.
Sämtliche hergestellten Platten haben folgende Maße: Länge = 1000 mm, Breite = 500 mm und Dicke = 40 mm

Beispiel 1:

Die Rohstoffe werden in folgendem Gewichtsverhältnis gewogen und homogen in einem Horizontalmischer gemischt:

| | |
|---|---|
| Pyrogene Kieselsäure, BET-Oberfläche 200 m²/g | 41 Gew.-% |
| PROMAXON®-D | 41,5 Gew.-% |
| SiC | 15 Gew.-% |
| SiO₂-Fillamente | 2,5 Gew.-% |

Die fertige Mischung wird auf einer hydraulischen 200 t - Plattenpresse auf ein Raumgewicht von 280 kg/m³ verpresst.

Die Platte hat folgende Eigenschaften:
Druckfestigkeit 350 kPa
Biegefestigkeit 70 kPa
Wärmeleitfähgikeit, 10 °C 0,030 W/mK
Feuchteaufnahme 7,5 Gew.-% bei 23 °C, 95 % Luftfeuchtigkeit in 24 h

### Beispiel 2:

Die Rohstoffe werden in folgendem Gewichtsverhältnis gewogen und homogen in einem Horizontalmischer gemischt:

| | |
|---|---|
| Pyrogene Kieselsäure, BET-Oberfläche 300 m²/g | 56,5 Gew.-% |
| PROMAXON®-D | 20 Gew.-% |
| SiC | 20 Gew.-% |
| SiO₂-Fillamente | 3,5 Gew.-% |

Die fertige Mischung wird auf einer hydraulischen 200 t - Plattenpresse auf ein Raumgewicht von 280 kg/m³ verpresst.

Die Platte hat folgende Eigenschaften:
Druckfestigkeit 300 kPa
Biegefestigkeit 65 kPa
Wärmeleitfähigkeit, 10 °C 0,028 W/mK
Feuchteaufnahme 6 % bei 23 °C, 95 % Luftfeuchtigkeit in 24 h

### Beispiel 3:

Die Rohstoffe werden in folgendem Gewichtsverhältnis gewogen und homogen in einem Horizontalmischer gemischt:

| | |
|---|---|
| Pyrogene Kieselsäure, BET-Oberfläche 200 m²/g | 11 Gew.-% |
| Hydrophobe Kieselsäure | 30 Gew.-% |
| PROMAXON®-B | 41 Gew.-% |
| Rutil | 15 Gew.-% |
| Zellwolle | 3,0 Gew.-% |

Die fertige Mischung wird auf einer hydraulischen 200 t - Plattenpresse auf ein Raumgewicht von 300 kg/m³ verpresst.

Die Platte hat folgende Eigenschaften:
Druckfestigkeit 400 kPa
Biegefestigkeit 30 kPa
Wärmeleitfähigkeit, 10 °C 0,031 W/mK
Feuchteaufnahme 3,5 Gew.-% bei 23 °C, 95 % Luftfeuchtigkeit in 24 h

Beispiel 3 zeigt, dass bei ausschließlicher Verwendung pyrogener Kieselsäure, wie in den Beispielen 1 und 2, gegenüber hydrophober Kieselsäure eine bessere Feuchteaufnahme erzielt werden kann. Das verwendete Calciumsilikatpulver mit durchgehend nadlig vernetzter Struktur (PROMAXON®-B) ist für diese Anwendung weniger geeignet, da die mechanische Belastbarkeit der Platte dadurch geringer wird.

### Vergleichsbeispiel:

Die Feuchteaufnahme einer reinen mikroporösen Dämmplatte ohne feines Calciumsilikatpulver bei 23 °C, 95 % Luftfeuchtigkeit in 24 h beträgt 3 - 4 %.

## Patentansprüche

1. Verwendung eines Dämmkörpers enthaltend oder bestehend aus
30 bis 90 Gew.-% an Metalloxiden von Silizium und/ oder Aluminium,
2 bis 70 Gew.-% wenigstens eines Calciumsilikats,
0 bis 30 Gew.-% wenigstens eines Trübungsmittels,
0 bis 10 Gew.-% wenigstens eines Fasermaterials sowie
0 bis 15 Gew.-% wenigstens eines anorganischen Bindemittels
zur Feuchtigkeitsregulierung von Gebäudeinnenräumen.

2. Verwendung nach Anspruch 1,
**dadurch gekennzeichnet, dass**
der Dämmkörper durch trocknes Verpressen seiner Bestandteile hergestellt ist, wobei der Dämmkörper insbesondere im Wesentlichen frei von organischen Bindemitteln ist.

3. Verwendung nach Anspruch 2,
**dadurch gekennzeichnet, dass**
der Dämmkörper nach dem Verpressen keiner thermischen Behandlung unterzogen wird, insbesondere nicht getempert oder calciniert.

4. Verwendung nach einem der vorstehenden Ansprüche,
**dadurch gekennzeichnet, dass**
der Dämmkörper eine Wärmeleitfähigkeit bei 10 °C gemäß von weniger als 0,06 W/mK aufweist, insbesondere von 0,05 W/mK oder weniger, bevorzugt von 0,04 W/mK oder weniger.

5. Verwendung nach einem der vorstehenden Ansprüche,
**dadurch gekennzeichnet, dass**
der Dämmkörper eine Feuchtigkeitsaufnahme bei 23 °C, 95 % relativer Luftfeuchtigkeit über einen Zeitraum von 24 Stunden von wenigstens 3 Gew.-% aufweist, insbesondere von wenigstens 4 Gew.-%, bevorzugt von 5 bis 15 Gew.-%.

6. Verwendung nach einem der vorstehenden Ansprüche,
**dadurch gekennzeichnet, dass**
der Dämmkörper 5 bis 15 Gew.-% an Calciumsilikat enthält.

7. Verwendung nach einem der vorstehenden Ansprüche,
**dadurch gekennzeichnet, dass**
das Calciumsilikat einen Gehalt an Xonotlit und/ oder Tobermorit von jeweils wenigstens 45 Gew.-% bezogen auf den Calciumsilikatanteil aufweist, insbesondere wenigstens 40 Gew.-%, wobei ein Xonotlitgehalt von größer 90 Gew %, insbesondere größer 95 Gew.% bevorzugt ist.

8. Verwendung nach einem der vorstehenden Ansprüche,
**dadurch gekennzeichnet, dass**
das Calciumsilikat im Wesentlichen durch die Summenformel Ca₆Si₆O₁₇(OH)₂ beschrieben ist.

9. Verwendung nach einem der vorstehenden Ansprüche,
**dadurch gekennzeichnet, dass**
das Calciumsilikat aus im Wesentlichen kugelförmigen Aggregaten mit einem Durchmesser von etwa 1 bis 500 µm aufgebaut ist, insbesondere von 5 bis 150 µm, wobei die Aggregate vorzugsweise aus einem Kern von miteinander vernetzten Kristallnadeln bestehen, der von einer im Vergleich zum Kern dichteren Hülle umgeben ist.

10. Verwendung nach einem der vorstehenden Ansprüche,
**dadurch gekennzeichnet, dass**
das Calciumsilikat eine Rohdichte gemäß ISO 697 von 50 bis 200 g/l aufweist, insbesondere von 60 bis 150 g/l.

11. Verwendung nach einem der vorstehenden Ansprüche,
**dadurch gekennzeichnet, dass**
das Calciumsilikat eine spezifische BET-Oberfläche gemäß ISO 977 von wenigstens 30 m²/g aufweist, insbesondere von wenigstens 40 m²/g.

12. Verwendung nach einem der vorstehenden Ansprüche,
**dadurch gekennzeichnet, dass**
die Metalloxide von Silizium und/ oder Aluminium ausgewählt sind aus pyrogener Tonerde und/oder pyrogener Kieselsäure, insbesondere hydrophiler pyrogener Kieselsäure oder Mischungen von diesen.

13. Verwendung nach einem der vorstehenden Ansprüche,
**dadurch gekennzeichnet, dass**
das Trübungsmittel ausgewählt ist aus Siliziumcarbid, Zirkonsilikat, Zirkonoxid, Titandioxid, insbesondere als Rutil, Ilmenit, Eisenoxid, insbesondere Eisen (II)/(III)-Mischoxide, Chromdioxid, Mangandioxid, Aluminiumoxid, Ruß oder Mischungen von diesen.

14. Verwendung nach einem der vorstehenden Ansprüche,
**dadurch gekennzeichnet, dass**
das Fasermaterial ausgewählt ist aus organischen oder anorganischen Fasermaterialien, insbesondere Cellulose-, Plymer-, HT-Glasfasern, Erdalkalifasern, Steinwolle sowie Mischungen von diesen.

15. Verwendung nach einem der vorstehenden Ansprüche,
**dadurch gekennzeichnet, dass**
der Dämmkörper das Fasermaterial in einer Menge von 0,1 bis zu 8 Gew.-% enthält.
